# EUROPEAN PATENT SPECIFICATION

(11) **EP 4 021 714 B1**
(45) Date of publication and mention of the grant of the patent: **25.09.2024**
(21) Application number: 20760461.2
(22) Date of filing: 25.08.2020
(51) Int. Cl.: B29D 99/00, B29C 70/52, B29C 70/44, B29C 70/86, B29B 13/06

(54) **METHOD FOR PRODUCING A SPAR CAP, TRAILING EDGE AND/OR OTHER REINFORCED LAMINATE STRUCTURAL PARTS OF WIND TURBINE BLADE**
VERFAHREN ZUR HERSTELLUNG EINES HOLMGURTS ODER EINES HINTEREN VERSTÄRKTEN LAMINATS EINER WINDTURBINENSCHAUFEL UND MIT DIESEM VERFAHREN HERGESTELLTES LAMINAT
PROCÉDÉ DE PRODUCTION D'UN CAPUCHON DE LONGERON OU D'UN STRATIFIÉ RENFORCÉ ARRIÈRE DE PALE D'ÉOLIENNE ET STRATIFIÉ AINSI OBTENU

(30) Priority: 30.08.2019 CN 201910821572; 11.10.2019 EP 19202872
(43) Date of publication of application: 06.07.2022
(73) Proprietor: Covestro Deutschland AG, 51373 Leverkusen (DE)
(72) Inventor: WU, Di, Shanghai 201206 (CN); LI, Zhijiang, Shanghai 201318 (CN); GU, Yongming, Shanghai 201208 (CN); ZHENG, Ian, Shanghai 201500 (CN); SUN, Guobin, Shanghai 200135 (CN)
(74) Representative: Levpat
(86) International application number: PCT/EP2020/073672
(87) International publication number: WO 2021/037817

(56) References cited:
- EP-A1- 3 501 808
- WO-A1-2019/051637

## Description

### Technical field

The invention pertains to the field of polyurethane composites. In particular, the invention relates to a method for producing a Spar Cap, trailing edge and/or other reinforced laminate structural parts of wind turbine blade by a polyurethane pultrusion forming process and a vacuum infusion process, the Spar Cap, trailing edge and/or other reinforced laminate structural parts of wind turbine blade produced by the method and its use.

### Background

In recent years, the superiority of polyurethane composites in the production of wind turbine blades has received increasing attention. Wind energy is considered to be one of the cleanest and most environmentally friendly energy sources available today, and therefore wind turbines have always been demanded in the market. Compared with conventional wind turbine blades made of epoxy resins, wind turbine blades made of polyurethane composites have the advantages of lower costs and better physical properties.

The resin matrix used in the present invention is a polyurethane resin, which has a viscosity greatly reduced when compared with the epoxy resins, and good weather resistance and fatigue resistance, and therefore can ensure the service life of its composite parts. In addition, it has a short curing cycle and can increase the capacity factor of equipment, thus resulting in reduced production costs. However, a single forming process cannot meet the high strength, low resin dosage, structural design and other requirements of large-scale composite components. The problem that needs to be solved urgently in the industry is how to further increase the content of a reinforced material in the Spar Cap, trailing edge and/or other reinforced laminate structural parts of wind turbine blade made of the polyurethane composite, enhance its strength, reduce the amount of resin raw materials used, and improve the possibility of structural design.

CN103921457B discloses a method for manufacturing a turbine blade Spar Cap or trailing reinforced laminate by using a unidirectional sheet produced by a pultrusion process, the method comprising: pultrusion preparation of a unidirectional fiber sheet, laying the pultruded unidirectional fiber sheet on a mold for the blade Spar Cap or trailing reinforced laminate, placing a glass fabric having a low area density between two layers of adjacent sheets, laying a flow guiding system on the Spar Cap/trailing reinforced laminate mold, vacuum-infusing a resin, heating and curing the resin, and obtaining it by forming. The whole process in the document is reasonable in design and operability, and can be used to produce wind power generation blades having different lengths and load requirements. In particular, this invention lays the Spar Cap/trailing reinforced laminate by using laying sheets prepared by a pultrusion process: this may effectively increase the tensile strength and elastic modulus of the material, greatly improve the firmness and the service life of the blade, maintain the form of the blade, and reduce the amount of materials used in the blade and thus save material costs. Besides, the process introduced in the document can overcome the quality problems such as wrinkles and bubbles which often occur in the unidirectional cloth laying of the traditional process.

CN107073888A discloses a wind turbine blade comprising an elongated reinforcing structure, the reinforcing structure comprising a plurality of slats made of a fiber reinforced polymer arranged in a stacked structure, and an infusion promoting layer included by at least one pair of adjacent slats within said plurality of slats, wherein the infusion promoting layer is a fabric comprising a plurality of twisted yarns. This invention also involves a method of assembling a wind turbine blade.

US2018058422A1 discloses a rotor blade component for a wind turbine. The rotor blade component includes a plurality of pre-cured members arranged in one or more layers. Each of the pre-cured members is constructed of a plurality of fiber materials cured together via a resin material having a first stiffness and at least additional material having a second stiffness. Further, the second stiffness is lower than the first stiffness. As such, the additional low-stiffness material is cured within the resin material so as to increase flexibility of the pre-cured members.

EP 3 501 808 A1 discloses a spar cap assembly for a wind turbine rotorblade as well its method for manufacture as also defined in the preamble of claim 1, said assembly may include pultruded strips of composite material having unidirectional fibers reinforcement and comprising e.g. epoxy, vinylester, polyurethane, polyester, etc. as matrix material. Despite the above disclosures, there is an urgent need in the industry for an improved process to obtain a Spar Cap, trailing edge and/or other reinforced laminate structural parts of wind turbine blade with more satisfactory strength.

### Summary of the invention

In one aspect of the present invention, there is provided a method for producing a Spar Cap, trailing edge and/or other reinforced laminate structural parts of wind turbine blade, comprising the steps of:
a) preparing a preform of the Spar Cap, trailing edge or other reinforced laminate structural part of wind turbine blade by a polyurethane pultrusion process;
b) placing at least one layer of the preform and at least one reinforced material, preferably a fiber reinforced material into a vacuum infusion mold; and
b) placing at least one layer of the preform and at least one reinforced material, preferably a fiber reinforced material into a vacuum infusion mold; and
c) vacuum-infusing a polyurethane composition (ii) (to the vacuum infusion mold), and curing it to obtain the Spar Cap, trailing edge or other reinforced laminate structural part of wind turbine blade;
wherein the Spar Cap, trailing edge and/or other reinforced laminate structural part of wind turbine blade comprises the reinforced material, preferably the fiber reinforced material in an amount of 80-88 wt%, preferably 80-85 wt%, based on the total weight of the Spar Cap, trailing edge or other reinforced laminate structural part of wind turbine blade.

Preferably, the step a) comprises:
infiltrating at least one fiber reinforced material with a polyurethane composition (i);
drawing the infiltrated fiber reinforced material at a speed of 0.2-2 m/min, preferably 0.4-1.5 m/min through a mold, and curing it to prepare the preform.

Preferably, the polyurethane composition (i) comprises:
component A comprising one or more organic polyisocyanates;
component B comprising one or more organic polyols.

Preferably, the preform comprises the fiber reinforced material in an amount of 80-88 wt%, preferably 80-85 wt%, based on the total weight of the preform. Preferably, the at least one layer of the preform is ≥ 2 layers of the preforms, preferably ≥ 4 layers of the preforms, and particularly preferably ≥ 5 layers of the preforms, and at least one reinforced material, preferably a fiber reinforced material is laid between every two layers of the preforms.

Preferably, the mold temperature is controlled to be 110 to 230 °C, preferably 150 to 220 °C.

Preferably, the polyurethane composition (i) or the polyurethane composition (ii) comprises:
component A comprising one or more organic polyisocyanates;
component B comprising:
   b1) one or more organic polyols in an amount of 21-60 wt%, preferably 21-40 wt%, based on the total weight of the polyurethane composition as 100 wt%;
   b2) one or more compounds having the structure of formula (I) 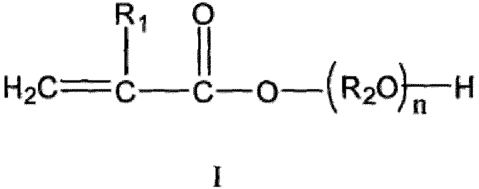
   wherein R1 is selected from hydrogen, methyl or ethyl; R2 is selected from an alkylene group having 2-6 carbon atoms, 2,2-di(4-phenylene)-propane, 1,4-di(methylene)-benzene, 1,3-di(methylene)-benzene, 1,2-di(methylene)-benzene; n is an integer selected from 1-6; and
component C, a radical initiator.

Preferably, the organic polyol has a functionality of 1.7-6, preferably 1.9-4.5, and a hydroxyl number of 150-1100 mg KOH/g, preferably 150-550 mg KOH/g.

Preferably, the b2) has a content of 4.6-33 wt%, based on the total weight of the polyurethane composition as 100 wt%.

Preferably, the component b2) is selected from the group consisting of: hydroxyethyl methacrylate, hydroxypropyl methacrylate, hydroxybutyl methacrylate, hydroxyethyl acrylate, hydroxypropyl acrylate, hydroxybutyl acrylate or a combination thereof.

Preferably, the step b) further comprises the step of dehumidifying the preform and the reinforced material, preferably the fiber reinforced material under vacuum.

Preferably, the step of dehumidifying comprises: covering the preform and the reinforced material with at least one film, sealing the periphery of the at least one film along the mold, and vacuumizing the space between the at least one film and the mold. Preferably, the at least one film is a two-layer film, which is sealed at its periphery and provided with at least one air inlet channel for introducing a hot air flow to heat the preform and the reinforced material and one air outlet channel for deriving the air flow of the space sealed within the two-layer film.

Preferably, the reinforced material is selected from the group consisting of glass fiber, carbon fiber, polyester fiber, natural fiber, aramid fiber, nylon fiber, basalt fiber, boron fiber, silicon carbide fiber, asbestos fiber, whisker, hard particles, metal fiber, or a combination thereof.

The fiber reinforced material is preferably glass fiber random wire layers, glass fiber fabrics and glass fiber gauzes, cut or milled glass fibers or mineral fibers and polymer fiber-, mineral fiber-, carbon fiber-, glass fiber- or aramid fiber-based fiber mats, fiber nonwovens and fiber knits, and a mixture thereof; more preferably glass fiber mats, glass fiber nonwovens, glass fiber fabrics, and a mixture thereof.

Preferably, the polyurethane composition (i) has a pot life of 15-90 minutes, preferably 20-60 minutes at room temperature.

Preferably, the polyurethane composition (i) has a curing time of 10-120 seconds, preferably 15-90 seconds at 150-220 °C.

Preferably, the polyurethane composition (ii) has a pot life of > 50 minutes, preferably > 60 minutes, and more preferably > 75 minutes at room temperature.

Preferably, the step c) further comprises:
providing a reaction injection device (40) comprising at least two storage tanks (48, 49) for accommodating the components of the polyurethane composition (ii), a vacuumizing device (50) and dosing units (44a, 44b), each of the dosing units (44a, 44b) being connected to the storage tank (48, 49) through a feed line (41, 42) and a mixing unit (43), and mixing the components from the dosing units (44a, 44b) together;
wherein the mold is peripherally sealed and connected to at least one injection line (31) which can be used for vacuumizing the vacuum infusion mold (55) and supplying the mixed components to the vacuum infusion mold (55), and optionally comprises a drying channel (32) for providing a drying gas (33), wherein the drying gas is supplied to the vacuum infusion mold (55) to dry the preform and reinforced material (21) placed in the vacuum infusion mold (55) and the vacuum infusion mold (55) is vacuumized by a vacuum source (34) during the vacuum infusion process, and is connected to the reaction injection device (40) through an injection line (45) at the injection line (31), wherein it can be vacuumized via the injection line (45) by a transversely closable outlet (46) which is connected to a vacuum source (47);
drying the vacuum infusion mold (55) and the preform and reinforced material (21) comprised therein, the injection line (45), and the optional dosing units (44a, 44b)/mixing unit (43), optionally by the drying gas (33) introduced through the drying channel (32);
starting the vacuum infusion process with the dosing units (44a, 44b) introducing the degassed components in the feed lines (41, 42) from the storage tanks (48, 49) to the reaction injection device (40), and obtaining the polyurethane composition (ii) from the components in the mixing unit (43), wherein the outlet (46) of the vacuum source (47) is closed before the polyurethane composition (ii) arrives;
injecting the polyurethane composition (ii) into the vacuum infusion mold (55) through the injection line (31), and meanwhile vacuumizing the vacuum infusion mold (55) via the drying channel (32) by the vacuum source (34), and holding the injection pressure measured at the injection port of the injection line (31) lower than the external atmospheric pressure.

In the second aspect of the present invention, there is provided a Spar Cap, trailing edge and/or other reinforced laminate structural part of wind turbine blade, produced by the method for producing a Spar Cap, trailing edge and/or other reinforced laminate structural parts of wind turbine blade according to the present invention.

In the third aspect of the present invention, there is provided a method for producing a wind turbine blade, comprising the method for producing a Spar Cap, trailing edge and/or other reinforced laminate structural parts of wind turbine blade according to the present invention.

In the fourth aspect of the present invention, there is provided a wind turbine blade, comprising a Spar Cap, trailing edge and/or other reinforced laminate structural parts of wind turbine blade produced by the method for producing a Spar Cap, trailing edge and/or other reinforced laminate structural parts of wind turbine blade according to the present invention.

It has been unexpectedly found that the method for producing a Spar Cap, trailing edge and/or other reinforced laminate structural parts of wind turbine blade according to the present invention effectively increases the content of the reinforced material, preferably the fiber reinforced material such as glass fiber in the product under the premise of ensuring product quality, and may reduce the amount of resin used, increase the structural strength of the composite, shorten the production cycle of the product, thereby comprehensively improving product quality and optimizing production capacity. The method of the present invention combines the high strength of the polyurethane pultrusion forming sheet and the flexibility of the vacuum infusion process to produce a polyurethane composite having excellent quality of light weight and high performance, and meanwhile also shortens the time of laying, infusion and curing, so as to reduce the overall production time of the product and reduce the overall costs and manufacturing quality risk of the production of the Spar Cap, trailing edge and/or other reinforced laminate structural parts of wind turbine blade.

Furthermore, in general, a higher content of the fiber reinforced material may lead to better static mechanical properties (such as tensile strength/modulus, bending strength/modulus) of the polyurethane composite, but, on the other hand, may also decrease its dynamic properties (such as fatigue resistance). Through repeated experiments, it has been unexpectedly found that the polyurethane composite comprising the fiber reinforced material in an amount of 80-88 wt%, preferably 80-85 wt% is the best choice for the production of a Spar Cap, trailing edge and/or other reinforced laminate structural parts of wind turbine blade, which has very ideal static mechanical properties and dynamic properties and therefore the optimal overall performance.

### Detailed description

Specific embodiments for carrying out the invention are described below.

In one aspect of the present invention, there is provided a method for producing a Spar Cap, trailing edge and/or other reinforced laminate structural parts of wind turbine blade, comprising the steps of:
a) preparing a preform of the Spar Cap, trailing edge or other reinforced laminate structural part of wind turbine blade by a polyurethane pultrusion process;
b) placing at least one layer of the preform and at least one reinforced material, preferably a fiber reinforced material into a vacuum infusion mold (55); and
c) vacuum-infusing a polyurethane composition (ii) (to the vacuum infusion mold), and curing it to obtain the Spar Cap, trailing edge and/or other reinforced laminate structural part of wind turbine blade;
wherein the Spar Cap, trailing edge and/or other reinforced laminate structural part of wind turbine blade comprises the reinforced material, preferably the fiber reinforced material in an amount of 80-88 wt%, preferably 80-85 wt%, based on the total weight of the Spar Cap, trailing edge and/or other reinforced laminate structural part of wind turbine blade of wind turbine blade.

Preferably, the step a) comprises:
infiltrating at least one fiber reinforced material with a polyurethane composition (i);
drawing the infiltrated fiber reinforced material at a speed of 0.2-2 m/min, preferably 0.4-1.5 m/min through a pultrusion die (5), and curing it to prepare the preform.

Preferably, the polyurethane composition (i) comprises:
component A comprising one or more organic polyisocyanates;
component B comprising one or more organic polyols.

Preferably, the preform comprises the fiber reinforced material in an amount of 80-88 wt%, preferably 80-85 wt%, based on the total weight of the preform.

Preferably, the temperature of the pultrusion die (5) is controlled to be 110 to 230 °C, preferably 150 to 220 °C.

Preferably, the polyurethane composition (i) or the polyurethane composition (ii) comprises:
component A comprising one or more organic polyisocyanates;
component B comprising:
   b1) one or more organic polyols in an amount of 21-60 wt%, preferably 21-40 wt%, based on the total weight of the polyurethane composition as 100 wt%;
   b2) one or more compounds having the structure of formula (I) 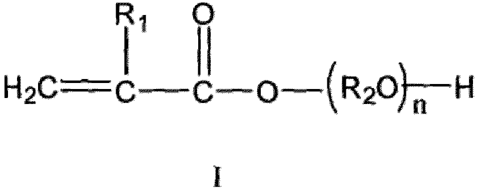
   wherein R1 is selected from hydrogen, methyl or ethyl; R2 is selected from an alkylene group having 2-6 carbon atoms, 2,2-di(4-phenylene)-propane, 1,4-di(methylene)-benzene, 1,3-di(methylene)-benzene, 1,2-di(methylene)-benzene; n is an integer selected from 1-6; and
component C, a radical initiator.

Preferably, the organic polyol has a functionality of 1.7-6, preferably 1.9-4.5, and a hydroxyl number of 150-1100 mg KOH/g, preferably 150-550 mg KOH/g.

Preferably, the b2) has a content of 4.6-33 wt%, based on the total weight of the polyurethane composition as 100 wt%.

Preferably, the component b2) is selected from the group consisting of: hydroxyethyl methacrylate, hydroxypropyl methacrylate, hydroxybutyl methacrylate, hydroxyethyl acrylate, hydroxypropyl acrylate, hydroxybutyl acrylate or a combination thereof.

Preferably, the step b) further comprises the step of dehumidifying the preform and the reinforced material, preferably the fiber reinforced material under vacuum.

Preferably, the step of dehumidifying comprises: covering the preform and the reinforced material, preferably the fiber reinforced material with at least one film, sealing the periphery of the at least one film along the vacuum infusion mold (55), and vacuumizing the space between the at least one film and the vacuum infusion mold (55). Preferably, the at least one film is a two-layer film, which is sealed at its periphery and provided with at least one air inlet channel for introducing a hot air flow to heat the preform and the reinforced material and one air outlet channel for deriving the air flow of the space sealed within the two-layer film.

Preferably, the reinforced material is selected from the group consisting of glass fiber, carbon fiber, polyester fiber, natural fiber, aramid fiber, nylon fiber, basalt fiber, boron fiber, silicon carbide fiber, asbestos fiber, whisker, hard particles, metal fiber, or a combination thereof.

Preferably, the polyurethane composition (i) has a pot life of 15-90 minutes, preferably 20-60 minutes at room temperature.

Preferably, the polyurethane composition (i) has a curing time of 10-120 seconds, preferably 15-90 seconds at 150-220 °C.

Preferably, the polyurethane composition (ii) has a pot life of > 50 minutes, preferably > 60 minutes, and more preferably > 75 minutes at room temperature.

Preferably, the method further comprises:
providing a reaction injection device (40) comprising at least two storage tanks (48, 49) for accommodating the components of the polyurethane composition (ii), a vacuumizing device (50) and dosing units (44a, 44b), each of the dosing units (44a, 44b) being connected to the storage tank (48, 49) through a feed line (41, 42) and a mixing unit (43), and mixing the components from the dosing units (44a, 44b) together;
wherein the mold is peripherally sealed and connected to at least one injection line (31) which can be used for vacuumizing the vacuum infusion mold (55) and supplying the mixed components to the vacuum infusion mold (55), and optionally comprises a drying channel (32) for providing a drying gas (33), wherein the drying gas is supplied to the vacuum infusion mold (55) to dry the preform and reinforced material (21) placed in the vacuum infusion mold (55) and the vacuum infusion mold (55) is vacuumized by a vacuum source (34) during the vacuum infusion process, and is connected to the reaction injection device (40) through an injection line (45) at the injection line (31), wherein it can be vacuumized via the injection line (45) by a transversely closable outlet (46) which is connected to a vacuum source (47);
drying the vacuum infusion mold (55) and the preform and reinforced material (21) comprised therein, the injection line (45), and the optional dosing units (44a, 44b)/mixing unit (43), optionally by the drying gas (33) introduced through the drying channel (32);
starting the vacuum infusion process with the dosing units (44a, 44b) introducing the degassed components in the feed lines (41, 42) from the storage tanks (48, 49) to the reaction injection device (40), and obtaining the polyurethane composition (ii) from the components in the mixing unit (43), wherein the outlet (46) of the vacuum source (47) is closed before the polyurethane composition (ii) arrives;
injecting the polyurethane composition into the vacuum infusion mold (55) through the injection line (31), and meanwhile vacuumizing the vacuum infusion mold (55) via the drying channel (32) by the vacuum source (34), and holding the injection pressure measured at the injection port of the injection line (31) lower than the external atmospheric pressure.

In the second aspect of the present invention, there is provided a Spar Cap, trailing edge and/or other reinforced laminate structural part of wind turbine blade, produced by the method for producing a Spar Cap, trailing edge and/or other reinforced laminate structural parts of wind turbine blade according to the present invention.

In the third aspect of the present invention, there is provided a method for producing a wind turbine blade, comprising the method for producing a Spar Cap, trailing edge and/or other reinforced laminate structural parts of wind turbine blade according to the present invention.

In the fourth aspect of the present invention, there is provided a wind turbine blade, comprising a Spar Cap, trailing edge and/or other reinforced laminate structural part of wind turbine blade produced by the method for producing a Spar Cap, trailing edge and/or other reinforced laminate structural parts of wind turbine blade according to the present invention.

Optionally, the organic polyisocyanate may be any aliphatic, alicyclic or aromatic isocyanate known for use in the preparation of a polyurethane. Examples thereof include, but are not limited to, toluene diisocyanate (TDI), diphenylmethane diisocyanate (MDI), polyphenylmethane polyisocyanate (pMDI), 1,5-naphthalene diisocyanate (NDI), hexamethylene diisocyanate (HDI), methylcyclohexyl diisocyanate (TDI), 4,4'-dicyclohexylmethane diisocyanate, isophorone diisocyanate (IPDI), p-phenylene diisocyanate (PPDI), p-xylylene diisocyanate (XDI), tetramethylxylylene diisocyanate (TMXDI) and their multimers, or a combination thereof. The isocyanate useful in the present invention preferably has a functionality of 2.0-3.5, particularly preferably 2.1-2.9. The isocyanate preferably has a viscosity of 5-700 mPa·s, particularly preferably 10-300 mPa·s, measured at 25 °C according to DIN 53019-1-3.

When used in the present invention, the organic polyisocyanate includes a isocyanate dimer, trimer, tetramer, pentamer, or a combination thereof.

In a preferred embodiment of the present invention, the isocyanate component A is selected from the group consisting of diphenylmethane diisocyanate (MDI), polyphenylmethane polyisocyanate (pMDI) and their multimers, prepolymers, or a combination thereof.

A blocked isocyanate, which can be prepared by reacting an excess of organic polyisocyanates or their mixture with a polyol compound, can also be used as the isocyanate component A. These compounds and their preparation methods are well known to the skilled person in the art.

The polyurethane composition of the present invention comprises one or more organic polyols b1). The organic polyol has a content of 21-60 wt%, based on the total weight of the polyurethane composition as 100 wt%. The organic polyol may be an organic polyol commonly used in the art for preparing a polyurethane, including but not limited to: a polyether polyol, a polyether carbonate polyol, a polyester polyol, a polycarbonate diol, a polymer polyol, a polyol based on vegetable oil, or a combination thereof.

The polyether polyol can be prepared by a known process, for example, by reacting an alkylene oxide with a starter in the presence of a catalyst. The catalyst is preferably, but not limited to, an alkali hydroxide, an alkali alkoxide, antimony pentachloride, boron fluoride etherate, or a mixture thereof. The alkylene oxide is preferably, but not limited to, tetrahydrofuran, ethylene oxide, propylene oxide, 1,2-butylene oxide, 2,3-butylene oxide, styrene oxide, or a mixture thereof, particularly preferably ethylene oxide and/or propylene oxide. The starter is preferably, but not limited to, a polyhydroxy compound or a polyamine compound. The polyhydroxy compound is preferably, but not limited to, water, ethylene glycol, 1,2-propanediol, 1,3-propanediol, diethylene glycol , trimethylolpropane, glycerin, bisphenol A, bisphenol S, or a mixture thereof; and the polyamine compound is preferably, but not limited to, ethylenediamine, propylenediamine, butanediamine, hexamethylenediamine, diethylenetriamine, toluenediamine, or a mixture thereof.

The polyether carbonate polyol can also be used in the present invention, and prepared by addition of carbon dioxide and an alkylene oxide onto a starter comprising active hydrogen using a double metal cyanide catalyst.

The polyester polyol is prepared by reacting a dicarboxylic acid or a dicarboxylic anhydride with a polyol. The dicarboxylic acid is preferably, but not limited to, an aliphatic carboxylic acid having 2-12 carbon atoms, which is preferably, but not limited to, succinic acid, malonic acid, glutaric acid, adipic acid, suberic acid, azelaic acid, sebacic acid, dodecyl carboxylic acid, maleic acid, fumaric acid, phthalic acid, isophthalic acid, terephthalic acid, or a mixture thereof. The dicarboxylic anhydride is preferably, but not limited to, phthalic anhydride, tetrachlorophthalic anhydride, maleic anhydride, or a mixture thereof. The polyol reacting with a dicarboxylic acid or a dicarboxylic anhydride is preferably, but not limited to, ethylene glycol, diethylene glycol, 1,2-propylene glycol, 1,3-propylene glycol, dipropylene glycol, 1,3-methylpropanediol, 1,4-butanediol, 1,5-pentanediol, 1,6-hexanediol, neopentyl glycol, 1,10-decanediol, glycerol, trimethylolpropane, or a mixture thereof. The polyester polyol also includes that made of a lactone. The polyester polyol made of a lactone is preferably, but not limited to, ε-caprolactone. Preferably, the polyester polyol has a molecular weight of 200-3,000 and a functionality of 2-6, preferably 2-5, and more preferably 2-4.

The polycarbonate diol can be prepared by reacting a diol with a dialkyl or diaryl carbonate or phosgene. The diol is preferably, but not limited to, 1,2-propylene glycol, 1,3-propylene glycol, 1,4-butanediol, 1,5-pentanediol, 1,6-hexanediol, diethylene glycol, s-trioxane glycol, or a mixture thereof. The dialkyl or diaryl carbonate is preferably, but not limited to, diphenyl carbonate.

The polymer polyol can be a polymer-modified polyether polyol, preferably a grafted polyether polyol, a polyether polyol dispersion. The grafted polyether polyol is preferably that based on styrene and/or acrylonitrile, which may be prepared by in-situ polymerization of styrene, acrylonitrile, or a mixture of styrene and acrylonitrile in a ratio of 90:10-10:90, preferably 70:30-30:70. The polymer polyol useful in the present invention can also be a bio-based polyol such as castor oil or wood tar. The polymer polyether polyol dispersion comprises a dispersed phase, for example, an inorganic filler, a polyurea, a polyhydrazide, a polyurethane containing a tertiary amino group and/or melamine in a bonded form. The dispersed phase has a content of 1-50 wt%, preferably 1-45 wt%, based on the total weight of the polymer polyether polyol as 100 wt%. Preferably, the polymer polyether polyol has a polymer solid content of 20-45 wt%, based on the total weight of the polymer polyether as 100 wt%, and a hydroxyl number of 20-50 mg KOH/g.

When used in the present invention, the polyol based on vegetable oil includes vegetable oil, a vegetable oil polyol or a modified product thereof. Vegetable oil is a compound prepared from an unsaturated fatty acid and glycerol or that extracted from the fruits, seeds or germs of a plant, preferably but not limited to peanut oil, soybean oil, linseed oil, castor oil, rapeseed oil, palm oil. The vegetable oil polyol is a polyol starting from one or more vegetable oils. The starter for the synthesis of a vegetable oil polyol includes, but is not limited to, soybean oil, palm oil, peanut oil, canola oil, and castor oil. The starter of a vegetable oil polyol can introduce hydroxyl groups by a process such as cracking, oxidation or transesterification, and the corresponding vegetable oil polyol can be then prepared by a process for preparing an organic polyol well known to the skilled person in the art.

Methods of measuring the hydroxyl number are well known to the skilled person in the art and are disclosed, for example, in Houben Weyl, Methoden der Organischen Chemie, vol. XIV/2 Makromolekulare Stoffe, p. 17, Georg Thieme Verlag; Stuttgart 1963.

When used in the present invention, the functionality and hydroxyl number of an organic polyol refer to the average functionality and average hydroxyl number, unless otherwise indicated. Optionally, the polyurethane composition of the present invention further comprises one or more compounds b2) having the structure of formula (I) 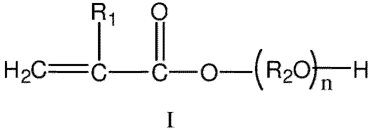 wherein R1 is selected from hydrogen, methyl or ethyl; R2 is selected from an alkylene group having 2-6 carbon atoms; n is an integer selected from 1-6.

In a preferred embodiment of the present invention, R2 is selected from the group consisting of ethylene, propylene, butylene, pentylene, 1-methyl-1,2-ethylene, 2-methyl-1,2-ethylene, 1-ethyl-1,2-ethylene, 2-ethyl-1,2-ethylene, 1-methyl-1,3-propylene, 2-methyl-1,3-propylene, 3-methyl-1,3-propylene, 1-ethyl-1,3-propylene, 2-ethyl-1,3-propylene, 3-ethyl-1,3-propylene, 1-methyl-1,4-butylene, 2-methyl-1,4-butylene, 3-methyl-1,4-butylene and 4-methyl-1,4-butylene, 2,2-di(4-phenylene)-propane, 1,4-dimethylenebenzene, 1,3-dimethylenebenzene, 1,2-dimethylenebenzene. Preferably, the b1) is selected from the group consisting of organic polyols, wherein the organic polyol has a functionality of 1.7-6, preferably 1.9-4.5, and a hydroxyl number of 150-1100 mg KOH/g, preferably 150-550 mg KOH/g.

In a preferred embodiment of the present invention, the component b2) is selected from the group consisting of: hydroxyethyl methacrylate, hydroxypropyl methacrylate, hydroxybutyl methacrylate, hydroxyethyl acrylate, hydroxypropyl acrylate, hydroxybutyl acrylate, or a combination thereof. The compound of formula (I) can be produced by a method commonly used in the art, for example, by esterification reaction of (meth)acrylic anhydride or (meth)acrylic acid, a (meth)acryloyl halide compound with HO-(R₂O)ₙ-H. The preparation method is well known to the skilled person in the art and described, for example, in "Handbook of Polyurethane Raw Materials and Auxiliary Agents" (Liu Yijun, published on April 1, 2005), Chapter 3; "Polyurethane Elastomer" (Liu Houzhen, published in August 2012), Chapter 2.

The polyurethane composition of the present invention further comprises a radical reaction initiator C. The radical initiator used in the present invention can be added to the polyol component or the isocyanate component or both components. These initiators include, but are not limited to, a peroxide, a persulfide, a peroxycarbonate, a peroxyboric acid, an azo compound, or any other suitable radical initiators which can initiate curing of a compound containing double bond. Examples thereof include tert-butyl peroxyisopropylcarbonate, tert-butyl peroxy-3,5,5-trimethylhexanoate, methyl ethyl ketone peroxide, and cumyl hydroperoxide. Preferably, the radical reaction initiator of the present invention has a content of 0.1-8 wt%, based on the total weight of the polyurethane composition of the present invention as 100 wt%. In addition, an accelerator such as a cobalt compound or an amine compound may also be present.

Optionally, the polyurethane composition may further comprise a catalyst for catalyzing the reaction of isocyanate groups (NCO) with hydroxyl groups (OH). The catalyst suitable for a polyurethane reaction is preferably, but not limited to, an amine catalyst, an organometallic catalyst, or a mixture thereof. The amine catalyst is preferably, but not limited to, triethylamine, tributylamine, triethylenediamine, N-ethylmorpholine, N,N,N',N'-tetramethyl-ethylenediamine, pentamethyldiethylene-triamine, N-methylaniline, N,N-dimethylaniline, or a mixture thereof. The organometallic catalyst is preferably, but not limited to, an organotin compound such as tin (II) acetate, tin (II) octoate, tin ethylhexanoate, tin laurate, dibutyltin oxide, dibutyltin dichloride, dibutyltin diacetate, dibutyltin maleate, dioctyltin diacetate, or a mixture thereof. Preferably, the catalyst is used in an amount of 0.001-10 wt%, based on the total weight of the polyurethane composition of the present invention as 100 wt%.

In an embodiment of the present invention, in the addition polymerization of isocyanate groups with hydroxyl groups, the isocyanate groups may be those contained in the organic polyisocyanate (component A), or those contained in the intermediate product of the reaction of the organic polyisocyanate (component A) with the organic polyol (component b1)) or the component b2); and the hydroxyl groups may be those contained in the organic polyol (component b1)) or the component b2), or those contained in the intermediate product of the reaction of the organic polyisocyanate (component A) with the organic polyol (component b1)) or the component b2).

In an embodiment of the present invention, the radical polymerization is the addition polymerization of ethylenic bonds, wherein the ethylenic bonds may be those contained in the component b2), or those contained in the intermediate product of the reaction of the component b2) with the organic polyisocyanate.

In an embodiment of the present invention, the polyurethane addition polymerization (i.e., the addition polymerization of isocyanate groups with hydroxyl groups) takes place simultaneously with the radical polymerization. It is well known to the skilled person in the art that suitable reaction conditions can be selected such that the polyurethane addition polymerization and the radical polymerization are carried out successively, but the resultant polyurethane matrix is different from that prepared by carrying out the polyurethane addition polymerization and the radical polymerization simultaneously, so that the mechanical properties and processability of the prepared polyurethane composites are different.

Optionally, the polyurethane composition may further comprise an auxiliary agent or an additive, including but not limited to: a filler, an internal mold release agent, a flame retardant, a smoke suppressant, a dye, a pigment, an antistatic agent, an antioxidant, a UV stabilizer, a diluent, a defoamer, a coupling agent, a surface wetting agent, a leveling agent, a water removing agent, a catalyst, molecular sieve, a thixotropic agent, a plasticizer, a foaming agent, a foam stabilizer, a foam homogenizing agent, a radical reaction inhibitor, or a combination thereof, which may optionally be contained in the isocyanate component A) and/or the isocyanate-reactive component B) of the present invention. These components can also be stored separately as component D), which is firstly mixed with the isocyanate component A) and/or the component B) of the present invention and then used in the preparation of a polyurethane composite.

In some embodiments of the present invention, the filler is selected from the group consisting of: aluminum hydroxide, bentonite, fly ash, wollastonite, perlite powder, floating beads, calcium carbonate, talc, mica powder, china clay, fumed silica , expandable microspheres, diatomaceous earth, volcanic ash, barium sulfate, calcium sulfate, glass microspheres, stone powder, wood powder, wood chips, bamboo powder, bamboo chips, rice grains, straw chips, sorghum stalk chips, graphite powder, metal powder, thermoset composite recycled powder, plastic granules or powder, or a combination thereof. The glass microspheres may be solid or hollow.

The internal mold release agent which can be used in the present invention includes any conventional mold release agent for producing a polyurethane, and examples thereof include a long-chain carboxylic acid, especially a fatty acid such as stearic acid, an amine of a long-chain carboxylic acid such as stearic amide, a fatty acid ester, a metal salt of a long-chain carboxylic acid, such as zinc stearate, or a polysiloxane.

Examples of the flame retardant which can be used in the present invention include triaryl phosphate, trialkyl phosphate, halogenated triaryl phosphate or trialkyl phosphate, melamine, melamine resin, halogenated paraffin, red phosphorus, or a composition thereof.

Other auxiliary agents which can be used in the present invention include a water removing agent such as molecular sieve; a defoamer such as polydimethylsiloxane; a coupling agent such as monooxirane or organoamine functionalized trialkoxysilanes or a composition thereof. The coupling agent is particularly preferably used to increase the adhesion of the resin matrix to the fiber reinforced material. A fine particulate filler, such as clay and fumed silica, is often used as the thixotropic agent.

The radical reaction inhibitor which can be used in the present invention includes a polymerization inhibitor, a polymerization retarder and the like, such as some phenols, quinones or hindered amine compounds, and examples thereof include methyl hydroquinone, p-methoxyphenol, benzoquinone, polymethylpyridine derivatives, low-valent copper ions, and the like.

Preferably, the polyurethane composition (i) of the present invention has a curing time of 10-120 seconds, preferably 15-90 seconds at 150-220 °C.

Preferably, the polyurethane composition (i) of the present invention has a gel time of 15-90 minutes, preferably 20-60 minutes at room temperature. In general, the term "gel time" refers to the time from the start of mixing components A and B of a reaction system until the viscosity reaches a certain value (for example, about 10000 mPa·s). The gel time in the Examples of the present invention is the time tested using a gel tester.

Preferably, the infiltration of the present invention is carried out in an infiltration device comprising a glue injection box and an open glue-dipping tank.

Preferably, the injection pressure in the glue injection box is 0.1-15 bar, preferably 0.1-10 bar.

Through repeated experiments, it has been unexpectedly found that the method for producing a Spar Cap, trailing edge and/or other reinforced laminate structural parts of wind turbine blade according to the present invention effectively increases the content of the reinforced material, preferably the fiber reinforced material such as glass fiber in the product, and may reduce the amount of resin used, increase the structural strength of the composite, shorten the production cycle of the product. Moreover, the Spar Cap, trailing edge and/or other reinforced laminate structural part of wind turbine blade produced by the method of the present invention has excellent physical properties and fatigue resistance, and is light in weight, costs-saving and easy to install and maintain. The method of the present invention combines the high strength of the polyurethane pultrusion forming sheet and the flexibility of the vacuum infusion process to produce a polyurethane composite having light weight and high strength, and meanwhile also shortens the time of laying, infusion and curing, so as to reduce the overall production time of the product and reduce the overall costs and manufacturing quality risk of the production of the Spar Cap, trailing edge and/or other reinforced laminate structural parts of wind turbine blade

In addition, the polyurethane composition (i) of the present invention has a relatively short curing time and a relatively long gel time, and can be more suitable for the preparation of pultruded polyurethane composites, particularly large-scale pultruded polyurethane composites (for example, it can be infiltrated and formed for a relatively long period of time). Specifically, the fiber reinforced material can be better infiltrated and formed at room temperature, such as before entering the mold, and it can be cured more quickly at a high temperature, such as after entering the mold.

All technical and scientific terms used herein have the same meaning as commonly understood by the skilled person in the art to which the present invention belongs, unless otherwise defined. When the definition of a term in the present description conflicts with the meaning as commonly understood by the skilled person in the art to which the present invention belongs, the definition described herein shall apply.

The invention is exemplified by the following examples, but it should be understood that the scope of the invention is not limited by these examples but defined by the appended claims.

### Description of figures

The invention is exemplified below with reference to the accompanying figures:

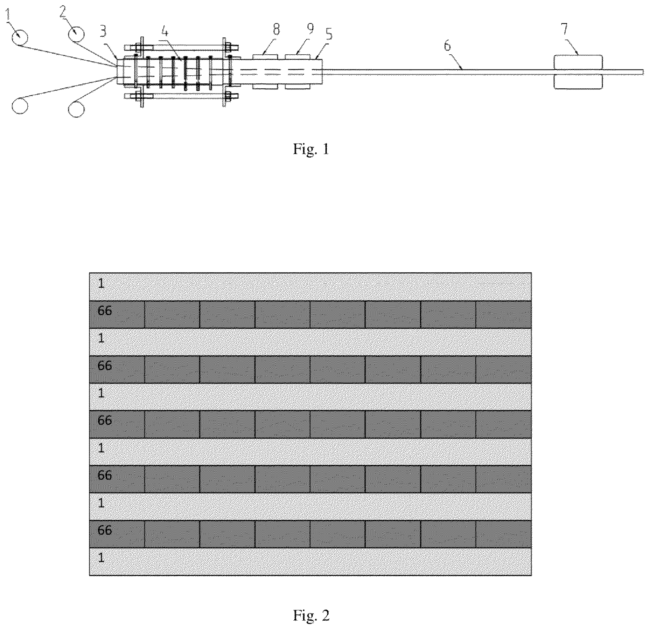

Fig. 1 shows a mold and a process flow shown in a method for producing a pultruded polyurethane composite by a pultrusion process according to the inventive Example 1, wherein 1 represents fibers; 2 represents a peel ply; 3 represents a yarn guiding device; 4 represents an infiltration device; 5 represents a pultrusion die; 6 represents a profile/pultruded composite; 7 represents a traction device; 8 and 9 represent heating devices.
Fig. 2 shows a schematic cross-sectional view of a Spar Cap, trailing edge or other reinforced laminate structural part of a wind turbine blade produced in the inventive Example 1, wherein 1 represents a reinforced material, i.e., glass fibers; and 66 represents a preform.

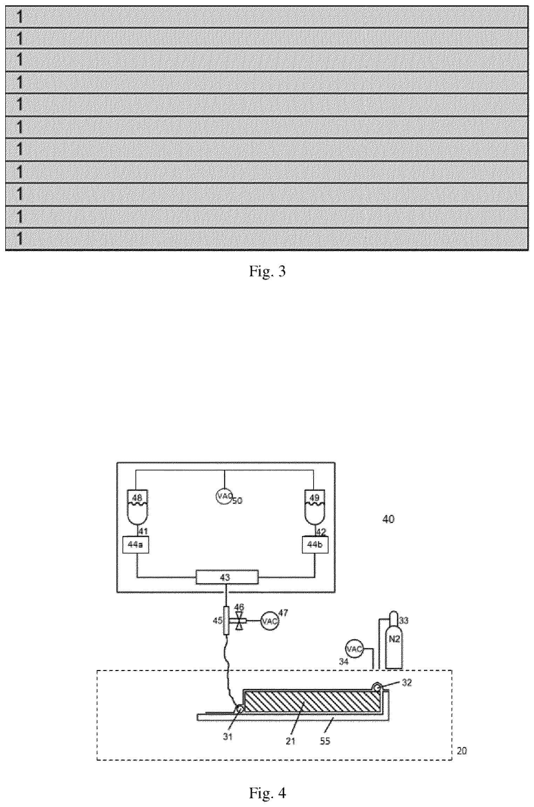

Fig. 3 shows a schematic cross-sectional view of a Spar Cap, trailing edge or other reinforced laminate structural part of a wind turbine blade produced only by a vacuum infusion process in the prior art, wherein 1 represents a reinforced material, i.e., glass fibers.
Fig. 4 shows a reaction injection device and a mold of the present invention, wherein 55 represents a vacuum infusion mold; 21 represents a preform and a reinforced material; 31 represents an injection line; 32 represents a drying channel; 33 represents drying air; 40 represents a reaction injection device; 41, 42 represent feed lines; 43 represents a mixing unit; 44a, 44b represent a dosing unit; 45 represents an injection line; 46 represents a closable outlet; 47 represents a vacuum source; 48, 49 represent storage tanks; 34, 50 represent vacuumizing devices.

### Examples

Test indication of performance parameters in the examples of the present application:
Functionality refers to the value determined according to the conventional formula: functionality = hydroxyl number * molecular weight/56100; wherein the molecular weight is determined by GPC high performance liquid chromatography. Isocyanate index refers to the value calculated by the following formula: isocyanate index (%) = (moles of isocyanate groups (NCO groups) in component A/moles of isocyanate-reactive groups in component B) * 100%.

NCO content refers to the content of NCO groups in a system, measured according to GB/T 12009.4-2016.

Pultrusion rate/speed, that is, the speed at which the fiber reinforced material is drawn through the pultrusion die (5), refers to the length of the pultruded fiber reinforced material through the pultrusion die (5) per minute, that is, the length of the pultruded article produced per minute. In a specific test method, a speed sensor or a stopwatch plus a ruler is used to measure the length of the pultruded fiber reinforced material and the time used, and the length through the pultrusion die (5) per unit time, that is, the pultrusion rate/speed, is obtained by the measured length of the pultruded fiber reinforced material divided by the time used.

Curing time refers to the time from the start of mixing components A and B of a reaction system to being cured.

Gel time refers to the time from the start of mixing components A and B of a reaction system until the viscosity reaches a certain value (for example, about 10000 mPa·s). The gel time within the present invention is the time tested using a gel tester. In a specific test method, components A and B are uniformly mixed and then placed in the gel tester, and the time from pressing the start button until the gel tester stops working is recorded, which is the gel time within the present invention.

### Raw materials and their description

**Table 1 - List of raw materials**

| Name of raw material/device | Specification/brand | Supplier |
|---|---|---|
| Isocyanate 1 | Desmodur 44CP20 | Covestro Polymers (China) Co., Ltd. |
| Isocyanate 2 | Desmodur 0223 | Covestro Polymers (China) Co., Ltd. |
| Polyol composition 1 | Baydur 78BD085 | Covestro Polymers (China) Co., Ltd. |
| Polyol composition 2 | Baydur 18BD207 | Covestro Polymers (China) Co., Ltd. |
| Internal mold release | Baydur 18BD101 | Covestro Polymers (China) Co., Ltd. |
| Glass fiber | PS 4100-2400Tex | Owens Corning Composites (China) Co., Ltd. |
| Pultrusion line | Composite crawler pultrusion machine | Nanjing Loyalty Composite Equipment Manufacture Co., Ltd. |
| injection machine | Hydraulic Mini Link System | Magnum Venus Products |
| Biaxial glass fiber cloth | EKB811 (+45°/-45°) | Chongqing International Composite Materials Co., Ltd. |
| | Specifications: 808 g/m² | |
| injection tube/Omega tube | Material: PE | Shanghai Leadgo-tech Co., Ltd. |
| | Specification: ϕ25mm | |
| Flow guiding net | Material: PE | Shanghai Leadgo-tech Co., Ltd. |
| | Specification: 160 g/m² | |
| Peel ply | Polyester peel ply 85 g/m² | Related market |
| Gel tester | GT-STHP-220 | Shanghai Senlan Scientific Instrument Co., Ltd. |

### Example 1:

First, taking a 3 mm * 100 mm flat profile as an example, as shown in Fig. 1, 240 bundles of glass fibers (1) were taken out from a creel, and meanwhile the peel ply (2) was taken out from another creel. After the glass fibers (1) and the peel ply (2) passed sequentially through the preformed plate (3), the glue injection box (4) and the pultrusion die (5) together, they were drawn forward by the traction device (7) until the glass fibers were all pulled smoothly. The heating device of the pultrusion die (5) was opened, and the mold temperature from the inlet to the outlet was controlled to be 120°C/220°C, respectively. After the temperature was stabilized, the glue injection machine was started. Component A (Desmodur 0223) and component B (a mixture of 100 parts of Baydur 18BD207 and 3 parts of Baydur 18BD101) were continuously pumped by the glue injection machine to the static mixing head at a weight ratio of 92:100. After mixed in the mixing head, they filled the glue injection box (4) to make the glass fiber (1) and the peel ply fully infiltrated, wherein the injection pressure in the glue injection box (4) was controlled to be 0.1-15 bar. The infiltrated glass fiber (1) was continuously pulled through the pultrusion die (5) at a speed of 0.4 m/min by the traction device (7). At a distance of 1 m after the pultrusion die (5), the resulting pultruded polyurethane composite/profile (it indicates good curing when it was hit with metal and sounds crisp) could be used as the preform for a Spar Cap, trailing edge and/or other reinforced laminate structural parts of wind turbine blade (hereinafter referred to as "preform") after design and cutting in accordance with the requirements.

Cut flow guiding net was placed on the Spar Cap vacuum infusion mold (55) and 7-8 cm away from its edge where air exhaust occurred; the isolation film and the peel ply were laid, and then one layer of glass fibers was laid (hereinafter collectively referred to as "overlay"). The pre-formed pultruded polyurethane sheet (that is, the preform) was cut according to the design of overlay structure, and its lead angles at both ends were smoothly transitioned. The preform was arranged on the biaxial glass fiber cloth, and 12 layers of preforms were repeatedly laid (glass fibers were laid between every two layers of preforms). Finally, the peel ply was laid to cover all the preforms. The glue injection tube was placed on the flow guiding net from the side where the glue injection for the Spar Cap occurred and 5 cm away from the overlay. Two rounds of sealing strips were placed all around and it was sealed with two layers of vacuum bags. The heater of the vacuum infusion mold (55) was set to heat at 20-35 °C; and the vacuum pump was connected to the glue injection tube to vacuumize it to reach 0-20 mbar; and it was heated for about 3 hours with an insulation blanket covered. The polyurethane composition (ii) (i.e. Baydur 78BD085/Desmodur 44CP20) was infused. After the completion of the infusion, the vacuum infusion mold (55) was set to carry out heat-curing. After curing, the mold and the vacuum auxiliary materials such as the peel ply and the flow guiding net were removed to obtain the wind turbine blade Spar Cap, trailing edge and/or other reinforced laminate structural part.

The Spar Cap, trailing edge and/or other reinforced laminate structural part of wind turbine blade produced in Example 1 has a glass fiber content of 81.9 wt%, based on the total weight of the Spar Cap, trailing edge and/or other reinforced laminate structural part of wind turbine blade, and exhibits good static mechanical properties and dynamic properties.

In addition, when comparing the schematic cross-sectional views of the Spar Cap, trailing edge and/or other reinforced laminate structural part of wind turbine blades shown in Fig. 2 according to the inventive Example 1 and shown in Fig. 3 according to the prior art, it can be found that the Spar Cap, trailing edge and/or other reinforced laminate structural part of wind turbine blade of the present invention has a criss-cross structure of glass fibers and preforms, which makes it more stable and enhances its pressure resistance.

In spite of the foregoing detailed description of the present invention for the purposes of the present invention, it is to be understood that this detailed description is exemplary in nature.

## Claims

1. A method for producing a Spar Cap, trailing edge and/or other reinforced laminate structural parts of wind turbine blade, comprising the steps of:
a) preparing a preform of the Spar Cap, trailing edge or other reinforced laminate structural part of wind turbine blade by a polyurethane pultrusion process;
b) placing at least one layer of the preform and at least one reinforced material, preferably a fiber reinforced material into a vacuum infusion mold; and
c) vacuum-infusing a polyurethane composition (ii), and curing it to obtain the Spar Cap, trailing edge or other reinforced laminate structural part of wind turbine blade;
**characterized in that**
step b) further comprises the step of dehumidifying the preform and the reinforced material under vacuum.

2. The method according to claim 1, **characterized in that** the at least one layer of the preform is ≥ 2 layers of the preforms, preferably ≥ 4 layers of the preforms, and more preferably ≥ 5 layers of the preforms, and at least one reinforced material, preferably a fiber reinforced material is laid between every two layers of the preforms.

3. The method according to claim 1, **characterized in that** the step a) comprises:
infiltrating at least one fiber reinforced material with a polyurethane composition (i);
drawing the infiltrated fiber reinforced material at a speed of 0.2-2 m/min, preferably 0.4-1.5 m/min through a pultrusion die, and curing it to prepare the preform.

4. The method according to claim 3, **characterized in that** the temperature of the pultrusion die (5) is controlled to be 110 to 230 °C, preferably 150 to 220 °C.

5. The method according to claim 3 or 4, **characterized in that** the preform comprises the fiber reinforced material which is selected from glass fiber in an amount of 80-88 wt%, preferably 80-85 wt%, based on the total weight of the preform.

6. The method according to one of claims 1-5, **characterized in that** the polyurethane composition (i) or the polyurethane composition (ii) comprises:
component A comprising one or more organic polyisocyanates;
component B comprising:
b1) one or more organic polyols in an amount of 21-60 wt%, preferably 21-40 wt%, based on the total weight of the polyurethane composition as 100 wt%;
b2) one or more compounds having the structure of formula (I) 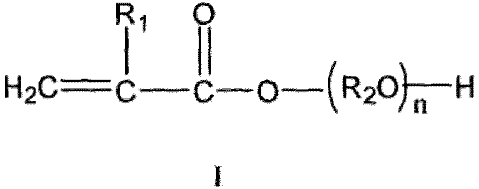
wherein R1 is selected from hydrogen, methyl or ethyl; R2 is selected from an alkylene group having 2-6 carbon atoms, 2,2-di(4-phenylene)-propane, 1,4-di(methylene)-benzene, 1,3-di(methylene)-benzene, 1,2-di(methylene)-benzene; n is an integer selected from 1-6; and
component C, a radical initiator.

7. The method according to one of claims 1-6, **characterized in that** the polyurethane composition (i) has a pot life of 15-90 minutes, preferably 20-60 minutes at room temperature.

8. The method according to one of claims 1-7, **characterized in that** the polyurethane composition (i) has a curing time of 10-120 seconds, preferably 15-90 seconds at 150-220 °C.

9. The method according one of claims 1-8, **characterized in that** the polyurethane composition (ii) has a pot life of > 50 minutes, preferably > 60 minutes, and more preferably > 75 minutes at room temperature.

10. The method according to one of the foregoing claims, **characterized in that** the step of dehumidifying comprises:
covering the preform and the reinforced material with at least one film, sealing the periphery of the at least one film along the mold, and vacuumizing the space between the at least one film and the mold; preferably, the at least one film is a two-layer film, which is sealed at its periphery and provided with at least one air inlet channel for introducing a hot air flow to heat the preform and the reinforced material and one air outlet channel for deriving the air flow of the space sealed within the two-layer film.

11. The method according to one of the foregoing claims, **characterized in that** the reinforced material is selected from the group consisting of glass fiber, carbon fiber, polyester fiber, natural fiber, aramid fiber, nylon fiber, basalt fiber, boron fiber, silicon carbide fiber, asbestos fiber, whisker, hard particles, metal fiber, or a combination thereof.

12. The method according to one of the foregoing claims, **characterized in that** the step c) further comprises:
providing a reaction injection device (40) comprising at least two storage tanks (48, 49) for accommodating the components of the polyurethane composition (ii), a vacuumizing device (50) and dosing units (44a, 44b), each of the dosing units (44a, 44b) being connected to the storage tank (48, 49) through a feed line (41, 42) and a mixing unit (43), and mixing the components from the dosing units (44a, 44b) together;
wherein the mold is peripherally sealed and connected to at least one injection line (31) which can be used for vacuumizing the vacuum infusion mold (55) and supplying the mixed components to the vacuum infusion mold (55), and optionally comprises a drying channel (32) for providing a drying gas (33), wherein the drying gas is supplied to the vacuum infusion mold (55) to dry the preform and reinforced material (21) placed in the vacuum infusion mold (55) and the vacuum infusion mold (55) is vacuumized by a vacuum source (34) during the vacuum infusion process, and is connected to the reaction injection device (40) through an injection line (45) at the injection line (31), wherein it can be vacuumized via the injection line (45) by a transversely closable outlet (46) which is connected to a vacuum source (47);
drying the vacuum infusion mold (55) and the preform and reinforced material (21) comprised therein, the injection line (45), and the optional dosing units (44a, 44b)/mixing unit (43), optionally by the drying gas (33) introduced through the drying channel (32);
starting the vacuum infusion process with the dosing units (44a, 44b) introducing the degassed components in the feed lines (41, 42) from the storage tanks (48, 49) to the reaction injection device (40), and obtaining the polyurethane composition (ii) from the components in the mixing unit (43), wherein the outlet (46) of the vacuum source (47) is closed before the polyurethane composition (ii) arrives;
injecting the polyurethane composition into the vacuum infusion mold (55) through the injection line (31), and meanwhile vacuumizing the vacuum infusion mold (55) via the drying channel (32) by the vacuum source (34), and holding the injection pressure measured at the injection port of the injection line (31) lower than the external atmospheric pressure.

13. A Spar Cap, trailing edge or other reinforced laminate structural part of wind turbine blade produced by the method according to any one of claims 1-12, comprising the reinforced material which is selected from glass fiberin an amount of 80-88 wt%, preferably 80-85 wt%, based on the total weight of the Spar Cap, trailing edge or other reinforced laminate structural part of wind turbine blade, and
wherein the polyurethane composition (i) or the polyurethane composition (ii) comprises:
component A comprising one or more organic polyisocyanates;
component B comprising:
b1) one or more organic polyols in an amount of 21-60 wt%, preferably 21-40 wt%, based on the total weight of the polyurethane composition as 100 wt%;
b2) one or more compounds having the structure of formula (I) 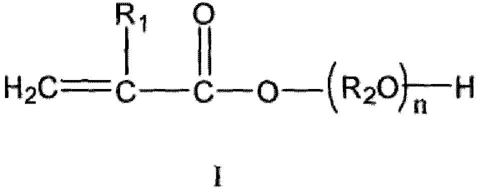
wherein R1 is selected from hydrogen, methyl or ethyl; R2 is selected from an alkylene group having 2-6 carbon atoms, 2,2-di(4-phenylene)-propane, 1,4-di(methylene)-benzene, 1,3-di(methylene)-benzene, 1,2-di(methylene)-benzene; n is an integer selected from 1-6; and
component C, a radical initiator.

14. A method for producing a wind turbine blade, comprising the method for producing a Spar Cap, trailing edge or other reinforced laminate structural part of wind turbine blade according to any one of claims 1-12.

15. A wind turbine blade, comprising the Spar Cap, trailing edge or other reinforced laminate structural part of wind turbine blade according to claim 13.

## Patentansprüche

1. Verfahren zur Herstellung eines Holmgurts, einer Hinterkante und/oder anderer verstärkter Laminat-Strukturteile eines Windturbinenblatts, umfassend die Schritte:
a) Herstellen einer Vorform des Holmgurts, der Hinterkante oder des anderen verstärkten Laminat-Strukturteils des Windturbinenblatts durch ein Polyurethan-Pultrusionsverfahren;
b) Platzieren wenigstens einer Schicht der Vorform und wenigstens eines verstärkten Materials, vorzugsweise eines faserverstärkten Materials, in ein Vakuuminfusion-Formwerkzeug; und
c) Vakuuminfundieren einer Polyurethanzusammensetzung (ii) und Härten davon, um den Holmgurt, die Hinterkante oder den anderen verstärkten Laminat-Strukturteil des Windturbinenblatts zu erhalten;
**dadurch gekennzeichnet, dass** Schritt b) ferner den Schritt des Entfeuchtens der Vorform und des verstärkten Materials unter Vakuum umfasst.

2. Verfahren gemäß Anspruch 1, **dadurch gekennzeichnet, dass** es sich bei der wenigstens einen Schicht der Vorform um ≥ 2 Schichten der Vorformen handelt, vorzugsweise ≥ 4 Schichten der Vorformen und bevorzugter ≥ 5 Schichten der Vorformen, und das wenigstens eine verstärkte Material, vorzugsweise ein faserverstärktes Material, zwischen jeweils zwei Schichten der Vorformen gelegt wird.

3. Verfahren gemäß Anspruch 1, **dadurch gekennzeichnet, dass** der Schritt a) umfasst:
Infiltrieren wenigstens eines faserverstärkten Materials mit einer Polyurethanzusammensetzung (i);
Ziehen des infiltrierten faserverstärkten Materials mit einer Geschwindigkeit von 0,2-2 m/min, vorzugsweise 0,4-1,5 m/min, durch eine Pultrusionsdüse und Härten davon, um die Vorform zu erhalten.

4. Verfahren gemäß Anspruch 3, **dadurch gekennzeichnet, dass** die Temperatur der Pultrusionsdüse (5) auf 110 bis 230 °C, vorzugsweise 150 bis 220 °C, geregelt ist.

5. Verfahren gemäß Anspruch 3 oder 4, **dadurch gekennzeichnet, dass** die Vorform das faserverstärkte Material, das aus Glasfaser ausgewählt ist, in einer Menge von 80-88 Gew.-%, vorzugsweise 80-85 Gew.-%, bezogen auf das Gesamtgewicht der Vorform umfasst.

6. Verfahren gemäß einem der Ansprüche 1 - 5, **dadurch gekennzeichnet, dass** die Polyurethanzusammensetzung (i) oder die Polyurethanzusammensetzung (ii) umfasst:
Komponente A, umfassend ein oder mehrere organische Polyisocyanate;
Komponente B, umfassend
b1) ein oder mehrere organische Polyole in einer Menge von 21-60 Gew.-%, vorzugsweise 21-40 Gew.-%, bezogen auf das Gesamtgewicht der Polyurethanzusammensetzung als 100 Gew.-%;
b2) eine oder mehrere Verbindungen mit der Struktur von Formel (I) 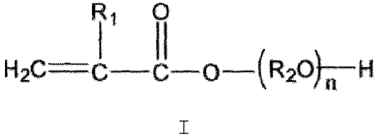
wobei R1 ausgewählt ist aus Wasserstoff, Methyl und Ethyl; R2 ausgewählt ist aus einer Alkylengruppe mit 2-6 Kohlenstoffatomen, 2,2-Di(4-phenylen)propan, 1,4-Di(methylen)benzol, 1,3-Di(methylen)benzol, 1,2-Di(methylen)benzol; n eine ganze Zahl ausgewählt aus 1-6 ist; und
Komponente C, ein Radikalinitiator.

7. Verfahren gemäß einem der Ansprüche 1 - 6, **dadurch gekennzeichnet, dass** die Polyurethanzusammensetzung (i) eine Topfzeit von 15-90 Minuten, vorzugsweise 20-60 Minuten, bei Raumtemperatur aufweist.

8. Verfahren gemäß einem der Ansprüche 1 - 7, **dadurch gekennzeichnet, dass** die Polyurethanzusammensetzung (i) eine Härtungsdauer von 10-120 Sekunden, vorzugsweise 15-90 Sekunden, bei 150-220 °C aufweist.

9. Verfahren gemäß einem der Ansprüche 1 - 8, **dadurch gekennzeichnet, dass** die Polyurethanzusammensetzung (ii) eine Topfzeit von > 50 Minuten, vorzugsweise > 60 Minuten und bevorzugter > 75 Minuten bei Raumtemperatur aufweist.

10. Verfahren gemäß einem der vorstehenden Ansprüche, **dadurch gekennzeichnet, dass** der Schritt des Entfeuchtens umfasst:
Bedecken der Vorform und des verstärkten Materials mit wenigstens einem Film, Abdichten des Rands des wenigstens einen Films entlang des Formwerkzeugs und Evakuieren des Raums zwischen dem wenigstens einen Film und dem Formwerkzeug; wobei der wenigstens eine Film vorzugsweise ein zweischichtiger Film ist, der an seinem Rand abgedichtet ist und mit wenigstens einem Lufteinlasskanal zum Einführen eines heißen Luftstroms zum Erhitzen der Vorform und des verstärkten Materials und einem Luftauslasskanal zum Abziehen des Luftstroms aus dem innerhalb des zweischichtigen Films abgedichteten Raum versehen ist.

11. Verfahren gemäß einem der vorstehenden Ansprüche, **dadurch gekennzeichnet, dass** das verstärkte Material ausgewählt ist aus der Gruppe bestehend aus Glasfaser, Kohlenstofffaser, Polyesterfaser, natürlicher Faser, Aramidfaser, Nylonfaser, Basaltfaser, Borfaser, Siliciumcarbidfaser, Asbestfaser, Whisker, harten Partikeln, Metallfaser und einer Kombination davon.

12. Verfahren gemäß einem der vorstehenden Ansprüche, **dadurch gekennzeichnet, dass** der Schritt c) ferner umfasst:
Bereitstellen einer Reaktionseinspritzvorrichtung (40) umfassend wenigstens zwei Vorratstanks (48, 49) zur Aufnahme der Komponenten der Polyurethanzusammensetzung (ii), eine Evakuierungsvorrichtung (50) und Dosiereinheiten (44a, 44b), wobei jede der Dosiereinheiten (44a, 44b) durch eine Zufuhrleitung (41, 42) und eine Mischeinheit (43) mit dem Vorratstank (48, 49) verbunden ist, und Zusammenmischen der Komponenten aus den Dosiereinheiten (44a, 44b);
wobei das Formwerkzeug am Rand abgedichtet und mit wenigstens einer Einspritzleitung (31) verbunden ist, die zum Evakuieren des Vakuuminfusion-Formwerkzeugs (55) und Zuführen der gemischten Komponenten zu dem Vakuuminfusion-Formwerkzeug (55) verwendet werden kann, und gegebenenfalls einen Trocknungskanal (32) zum Bereitstellen eines Trocknungsgases (33) umfasst, wobei das Trocknungsgas dem Vakuuminfusion-Formwerkzeug (55) zugeführt wird, um die Vorform und das verstärkte Material (21), die in dem Vakuuminfusion-Formwerkzeug (55) angeordnet sind, zu trocknen, und das Vakuuminfusion-Formwerkzeug (55) während des Vakuuminfusionsverfahrens durch eine Vakuumquelle (34) evakuiert wird, und durch eine Einspritzleitung (45) an der Einspritzleitung (31) mit der Reaktionseinspritzvorrichtung (40) verbunden ist, wobei es über die Einspritzleitung (45) durch einen in Querrichtung verschließbaren Auslass (46), der mit einer Vakuumquelle (47) verbunden ist, evakuiert werden kann; Trocknen des Vakuuminfusion-Formwerkzeugs (55) und der Vorform und des verstärkten Materials (21), die darin enthalten sind, der Einspritzleitung (45) und der optionalen Dosiereinheiten (44a, 44b)/Mischeinheit (43), gegebenenfalls durch das durch den Trocknungskanal (32) eingeführte Trocknungsgas (33);
Starten des Vakuuminfusionsvorgangs, indem die Dosiereinheiten (44a, 44b) die entgasten Komponenten von den Vorratstanks (48, 49) in die Zufuhrleitungen (41, 42) in die Reaktionseinspritzvorrichtung (40) einführen, und Erhalten der Polyurethanzusammensetzung (ii) aus den Komponenten in der Mischeinheit (43), wobei der Auslass (46) der Vakuumquelle (47) geschlossen wird, bevor die Polyurethanzusammensetzung (ii) ankommt;
Einspritzen der Polyurethanzusammensetzung in das Vakuuminfusion-Formwerkzeug (55) durch die Einspritzleitung (31) und währenddessen Evakuieren des Vakuuminfusion-Formwerkzeugs (55) über den Trocknungskanal (32) durch die Vakuumquelle (34) und Halten des Einspritzdrucks, gemessen an der Einspritzöffnung der Einspritzleitung (31), unter dem externen Atmosphärendruck.

13. Holmgurt, Hinterkante oder anderer verstärkter Laminat-Strukturteil eines Windturbinenblatts, hergestellt durch das Verfahren gemäß einem der Ansprüche 1-12, umfassend das verstärkte Material, das aus Glasfasern ausgewählt ist, in einer Menge von 80-88 Gew.-%, vorzugsweise 80-85 Gew.-%, bezogen auf das Gesamtgewicht des Holmgurts, der Hinterkante oder des anderen verstärkten Laminat-Strukturteils eines Windturbinenblatts, und
wobei die Polyurethanzusammensetzung (i) oder die Polyurethanzusammensetzung (ii) umfasst:
Komponente A, umfassend ein oder mehrere organische Polyisocyanate;
Komponente B, umfassend
b1) ein oder mehrere organische Polyole in einer Menge von 21-60 Gew.-%, vorzugsweise 21-40 Gew.-%, bezogen auf das Gesamtgewicht der Polyurethanzusammensetzung als 100 Gew.-%;
b2) eine oder mehrere Verbindungen mit der Struktur von Formel (I) 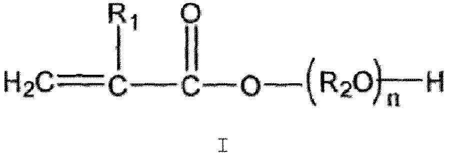
wobei R1 ausgewählt ist aus Wasserstoff, Methyl und Ethyl; R2 ausgewählt ist aus einer Alkylengruppe mit 2-6 Kohlenstoffatomen, 2,2-Di(4-phenylen)propan, 1,4-Di(methylen)benzol, 1,3-Di(methylen)benzol, 1,2-Di(methylen)benzol; n eine ganze Zahl ausgewählt aus 1-6 ist; und
Komponente C, ein Radikalinitiator.

14. Verfahren zur Herstellung eines Windturbinenblatts, umfassend das Verfahren zur Herstellung eines Holmgurts, einer Hinterkante oder eines anderen verstärkten Laminat-Strukturteils eines Windturbinenblatts gemäß einem der Ansprüche 1-12.

15. Windturbinenblatt, umfassend den Holmgurt, die Hinterkante oder den anderen verstärkten Laminat-Strukturteil des Windturbinenblatts gemäß Anspruch 13.

## Revendications

1. Procédé pour la production d'une semelle de longeron, d'un bord de fuite et/ou d'autres pièces structurales stratifiées renforcées d'une pale de turbine d'éolienne, comprenant les étapes de :
a) préparation d'une préforme de la semelle de longeron, du bord de fuite ou des autres pièces structurales stratifiées renforcées d'une pale de turbine d'éolienne par processus de pultrusion de polyuréthane ;
b) placement d'au moins une couche de la préforme et d'au moins un matériau renforcé, préférablement un matériau renforcé par des fibres dans un moule d'infusion sous vide ; et
c) infusion sous vide d'une composition de polyuréthane (ii), et durcissement de celle-ci pour obtenir la semelle de longeron, le bord de fuite ou les autres pièces structurales stratifiées renforcées d'une pale de turbine d'éolienne ;
**caractérisé en ce que** l'étape b) comprend en outre l'étape de déshumidification de la préforme et du matériau renforcé sous vide.

2. Procédé selon la revendication 1, **caractérisé en ce que** l'au moins une couche de la préforme est ≥ 2 couches des préformes, préférablement ≥ 4 couches des préformes, et plus préférablement ≥ 5 couches des préformes, et au moins un matériau renforcé, préférablement un matériau renforcé par des fibres étant posé entre chaque deux couches des préformes.

3. Procédé selon la revendication 1, **caractérisé en ce que** l'étape a) comprend :
une infiltration d'au moins un matériau renforcé par des fibres avec une composition de polyuréthane (i) ;
un étirage du matériau renforcé par des fibres infiltré à une vitesse de 0,2 à 2 m/min, préférablement 0,4 à 1,5 m/min à travers une filière de pultrusion, et un durcissement de celui-ci pour préparer la préforme.

4. Procédé selon la revendication 3, **caractérisé en ce que** la température de la filière de pultrusion (5) est régulée pour être de 110 à 230 °C, préférablement 150 à 220 °C.

5. Procédé selon la revendication 3 ou 4, **caractérisé en ce que** la préforme comprend le matériau renforcé par des fibres qui est choisi parmi une fibre de verre en une quantité de 80 à 88 % en poids, préférablement 80 à 85 % en poids, sur la base du poids total de la préforme.

6. Procédé selon l'une des revendications 1 à 5, **caractérisé en ce que** la composition de polyuréthane (i) ou la composition de polyuréthane (ii) comprend :
un composant A comprenant un ou plusieurs polyisocyanates organiques ;
un composant B comprenant :
b1) un ou plusieurs polyols organiques en une quantité de 21 à 60 % en poids, préférablement 21 à 40 % en poids, sur la base du poids total de la composition de polyuréthane comme 100 % en poids ;
b2) un ou plusieurs composés ayant la structure de formule (I) 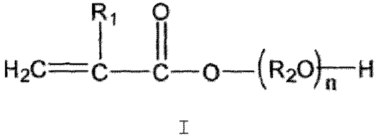
R1 étant choisi parmi hydrogène, méthyle ou éthyle ; R2 étant choisi parmi un groupe alkylène ayant 2-6 atomes de carbone, 2,2-di(4-phénylène)-propane, 1,4-di(méthylène)-benzène, 1,3-di(méthylène)-benzène, 1,2-di(méthylène)-benzène ; n étant un entier choisi de 1 à 6 ; et
un composant C, un initiateur de radicaux.

7. Procédé selon l'une des revendications 1 à 6, **caractérisé en ce que** la composition de polyuréthane (i) possède un temps de travail de 15 à 90 minutes, préférablement 20 à 60 minutes à température ambiante.

8. Procédé selon l'une des revendications 1 à 7, **caractérisé en ce que** la composition de polyuréthane (i) possède un temps de durcissement de 10 à 120 secondes, préférablement 15 à 90 secondes à une température de 150 à 220 °C.

9. Procédé selon l'une des revendications 1 à 8, **caractérisé en ce que** la composition de polyuréthane (ii) possède un temps de travail de > 50 minutes, préférablement > 60 minutes, et plus préférablement > 75 minutes à température ambiante.

10. Procédé selon l'une des revendications précédentes, **caractérisé en ce que** l'étape de déshumidification comprend :
le recouvrement de la préforme et du matériau renforcé avec au moins un film, l'étanchéification de la périphérie de l'au moins un film le long du moule, et la mise sous vide de l'espace entre l'au moins un film et le moule ; préférablement, l'au moins un film étant un film bicouche, qui est scellé au niveau de sa périphérie et pourvu d'au moins un canal d'entrée d'air pour l'introduction d'un flux d'air chaud pour chauffer la préforme et le matériau renforcé et un canal de sortie d'air pour dériver le flux d'air de l'espace scellé dans le film bicouche.

11. Procédé selon l'une des revendications précédentes, **caractérisé en ce que** le matériau renforcé est choisi dans le groupe constitué par une fibre de verre, une fibre de carbone, une fibre de polyester, une fibre naturelle, une fibre d'aramide, une fibre de nylon, une fibre de basalte, une fibre de bore, une fibre de carbure de silicium, une fibre d'amiante, la trichite, des particules dures, une fibre métallique ou une combinaison correspondante.

12. Procédé selon l'une des revendications précédentes, **caractérisé en ce que** l'étape c) comprend en outre :
la fourniture d'un dispositif d'injection de réaction (40) comprenant au moins deux réservoirs de stockage (48, 49) pour recevoir les composants de la composition de polyuréthane (ii), un dispositif de mise sous vide (50) et des unités de dosage (44a, 44b), chacune des unités de dosage (44a, 44b) étant connectée au réservoir de stockage (48, 49) par l'intermédiaire d'une ligne d'alimentation (41, 42) et d'une unité de mélange (43), et le mélange ensemble des composants des unités de dosage (44a, 44b) ;
le moule étant scellé de manière périphérique et connecté à au moins une ligne d'injection (31) qui peut être utilisée pour mettre sous vide le moule d'infusion sous vide (55) et alimenter les composants mélangés au moule d'infusion sous vide (55), et éventuellement comprenant un canal de séchage (32) pour fournir un gaz de séchage (33), le gaz de séchage étant alimenté au moule d'infusion sous vide (55) pour sécher la préforme et le matériau renforcé (21) placés dans le moule d'infusion sous vide (55) et le moule d'infusion sous vide (55) étant mis sous vide par une source de vide (34) pendant le processus d'infusion sous vide, et étant relié au dispositif d'injection de réaction (40) par le biais d'une ligne d'injection (45) à la ligne d'injection (31), le moule d'infusion sous vide pouvant être mis sous vide via la ligne d'injection (45) par une sortie pouvant être fermée de manière transversale (46) qui est connectée à une source de vide (47) ;
le séchage du moule d'infusion sous vide (55) et de la préforme et du matériau renforcé (21) compris dans celui-ci, de la ligne d'injection (45), et des unités de dosage éventuelles (44a, 44b)/de l'unité de mélange (43), éventuellement par le gaz de séchage (33) introduit par l'intermédiaire du canal de séchage (32) ;
le commencement du processus d'infusion sous vide avec les unités de dosage (44a, 44b) introduisant les composants dégasés dans les lignes d'alimentation (41, 42) depuis les réservoirs de stockage (48, 49) au dispositif d'injection de réaction (40), et l'obtention de la composition de polyuréthane (ii) à partir des composants dans l'unité de mélange (43), la sortie (46) de la source de vide (47) étant fermée avant que la composition de polyuréthane (ii) n'arrive ;
l'injection de la composition de polyuréthane dans le moule d'infusion sous vide (55) par l'intermédiaire de la ligne d'injection (31), et pendant ce temps la mise sous vide du moule d'infusion sous vide (55) via le canal de séchage (32) par la source de vide (34), et le maintien de la pression d'injection mesurée au niveau de l'orifice d'injection de la ligne d'injection (31) plus basse que la pression atmosphérique externe.

13. Semelle de longeron, bord de fuite ou autre pièce structurale stratifiée renforcée d'une pale de turbine d'éolienne produit(e) par le procédé selon l'une quelconque des revendications 1 à 12, comprenant le matériau renforcé qui est choisi parmi une fibre de verre en une quantité de 80 à 88 % en poids, préférablement 80 à 85 % en poids, sur la base du poids total de la semelle de longeron, du bord de fuite ou de l'autre pièce structurale stratifiée renforcée d'une pale de turbine d'éolienne, et
la composition de polyuréthane (i) ou la composition de polyuréthane (ii) comprenant :
un composant A comprenant un ou plusieurs polyisocyanates organiques ;
un composant B comprenant :
b1) un ou plusieurs polyols organiques en une quantité de 21 à 60 % en poids, préférablement 21 à 40 % en poids, sur la base du poids total de la composition de polyuréthane comme 100 % en poids ;
b2) un ou plusieurs composés ayant la structure de formule (I) 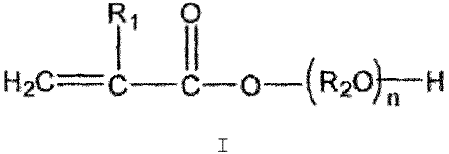
R1 étant choisi parmi hydrogène, méthyle ou éthyle ; R2 étant choisi parmi un groupe alkylène ayant 2-6 atomes de carbone, 2,2-di(4-phénylène)-propane, 1,4-di(méthylène)-benzène, 1,3-di(méthylène)-benzène, 1,2-di(méthylène)-benzène ; n étant un entier de 1 à 6 ; et un composant C, un initiateur de radicaux.

14. Procédé pour la production d'une pale de turbine d'éolienne, comprenant le procédé pour la production d'une semelle de longeron, d'un bord de fuite ou d'une autre pièce structurale stratifiée renforcée d'une pale de turbine d'éolienne selon l'une quelconque des revendications 1 à 12.

15. Pale de turbine d'éolienne, comprenant la semelle de longeron, le bord de fuite ou l'autre pièce structurale stratifiée renforcée d'une pale de turbine d'éolienne selon la revendication 13.
